# EUROPEAN PATENT SPECIFICATION

(11) **EP 3 757 738 B1**
(45) Date of publication and mention of the grant of the patent: **05.08.2026**
(21) Application number: 19216081.0
(22) Date of filing: 13.12.2019
(51) Int. Cl.: G06F 3/048, G06F 3/0484, G06F 3/0488, G06F 9/451, G06F 3/0483

(54) **METHOD AND DEVICE FOR PAGE PROCESSING**
VERFAHREN UND VORRICHTUNG ZUR SEITENVERARBEITUNG
PROCÉDÉ ET DISPOSITIF DE TRAITEMENT DE PAGE

(30) Priority: 28.06.2019 CN 201910580258
(43) Date of publication of application: 30.12.2020
(73) Proprietor: Beijing Xiaomi Mobile Software Co., Ltd., Beijing 100085 (CN)
(72) Inventor: ZHANG, Yihong, Beijing, Beijing 100085 (CN); WANG, Ying, Beijing, Beijing 100085 (CN)
(74) Representative: dompatent

(56) References cited:
- CN-A- 109 831 586
- US-A1- 2012 311 466
- ANONYMOUS: "Android Launchers: How to install, change and customise your ph", 24 June 2019 (2019-06-24), XP055705546, Retrieved from the Internet <URL:https://www.pocket-lint.com/apps/news/google/138447-android-launchers-how-to-install-change-and-customise-your-phone> [retrieved on 20200616]

## Description

### TECHNICAL FIELD

The present disclosure generally relates to the technical field of terminal devices, and more particularly, to a method and device for page processing.

### BACKGROUND

A terminal device may usually have multiple display pages, and different Applications (APPs) or display contents are presented on different display pages. A user may switch different pages through a swipe operation to display them on a desktop, and to further operate an APP on the desktop or acquire information about time, weather and the like on the desktop. When a user executes an operation for presenting the desktop, for example, pressing a home button, the display page is usually returned to a default desktop page.

D1: Android Launchers: How to install, change and customize your phone, published on June 24, 2019, discusses related technology.

D3: US 2012/311466A1 discusses homepage re-assignment.

### SUMMARY

A method and device for page processing, a display terminal and a storage medium are provided. According to a first aspect of embodiments of the present disclosure, a method for page processing is provided, which is implemented by a computer and may include that:
a setting page is displayed;
a first switching operation on a setting page is received from a user;
a first interface is switched to a main interface based on the first switching operation, the first interface and the main interface being different interfaces before switching, wherein switching the first interface to the main interface is setting the first interface as the main interface; and
upon when a preset operation is detected, the first interface is displayed, the preset operation being used for instructing a terminal to display the main interface.

Displaying of the setting page is triggered according to a triggering event, wherein the triggering event is that time for operating the first interface exceeds a preset time length.

In an embodiment, the first interface may be a MinusOneScreenView interface which is displayed as a desktop after a switching operation such as a rightward swipe is performed on a default desktop.

In an embodiment, the operation that the setting page is displayed may include that:
a second switching operation is detected, the main interface is switched to the first interface based on the second switching operation, and switching information about switching from the main interface to the first interface is recorded; and
upon when the switching information meets a preset condition, the setting page is displayed.

In an embodiment, the operation that the setting page is displayed upon when the switching information meets the preset condition may include that:
upon when a using frequency, determined based on the switching information, of the first interface meets the preset condition, the setting page is displayed.

In an embodiment, the operation that the switching information about switching from the main interface to the first interface is recorded may include that:
information about entry time of switching from the main interface to the first interface is recorded; and
the method may further include that: information about exit time of exiting from the first interface is recorded,
the using frequency of the first interface is determined according to the information about the entry time and the information about the exit time.

In an embodiment, the method may further include that:
the information about the entry time and the information about the exit time are reported to a server, and
an interface change instruction sent by the server when the using frequency of the first interface is determined according to the information about the entry time and the information about the exit time to meet the preset condition is received; and
the operation that the setting page is displayed when the using frequency, determined based on the switching information, of the first interface meets the preset condition may include that: the setting page is displayed based on the interface change instruction.

In an embodiment, the operation that the using frequency of the first interface is determined according to the information about the entry time and the information about the exit time may include that:
when a difference between the exit time and the entry time is greater than a preset duration, it is determined that switching from the main interface to the first interface is use of the first interface once; and
the using frequency of the first interface is determined according to the number of times of use of the first interface.

In an embodiment, the operation that the first interface is switched to the main interface may include that:
a first index of the main interface in a desktop configuration field in a global setting is modified into a second index of the first interface; and
the operation that the first interface is displayed upon when the preset operation is detected may include that:
   upon when the preset operation is detected under any user account, the first interface is displayed.

In an embodiment, the operation that the first interface is switched to the main interface may include that:
the first index of the main interface in a desktop configuration field in a user setting of a target user account is modified into a second index of the first interface; and
the operation that the first interface is displayed upon when the preset operation is detected may include that:
   upon when the preset operation is detected under the target user account, the first interface is displayed.

According to a second aspect of the embodiments of the present disclosure, a device for page processing is provided, which includes a first receiving module, a switching module, a first display module and a second display module, wherein
the first receiving module is configured to receive a first switching operation on a setting page from a user;
the switching module is configured to switch a first interface to a main interface based on the first switching operation, the first interface and the main interface being different interfaces before switching;
the first display module is configured to, upon when a preset operation is detected, display the first interface, the preset operation being used for instructing a terminal to display the main interface; and
the second display module is configured to, before the first switching operation on the setting page is received from the user, display the setting page.

Displaying the setting page is triggered according to a triggering event, wherein the triggering event is that time for operating the first interface exceeds a preset time length.

In an embodiment, the first interface may be a MinusOneScreenView interface which is displayed as a desktop after a switching operation such as a rightward swipe is performed on a default desktop.

In an embodiment, the second display module may further include:
a detection submodule, configured to detect a second switching operation, switch the main interface to the first interface based on the second switching operation and record switching information about switching from the main interface to the first interface; and
a first display submodule, configured to, upon when the switching information meets a preset condition, display the setting page.

In an embodiment, the first display submodule may include:
a first display unit, configured to, upon when a using frequency, determined based on the switching information, of the first interface meets the preset condition, display the setting page.

In an embodiment, the detection submodule may include:
a first recording unit, configured to record information about entry time of switching from the main interface to the first interface;
a second recording unit, configured to record information about exit time of exiting from the first interface; and
a determination unit, configured to determine the using frequency of the first interface according to the information about the entry time and the information about the exit time.

In an embodiment, the device may further include:
a sending module, configured to report the information about the entry time and the information about the exit time to a server, and
a second receiving module, configured to receive an interface change instruction which is sent by the server when the using frequency of the first interface is determined according to the information about the entry time and the information about the exit time to meet the preset condition; and
the second display module may further include:
   a second display submodule, configured to display the setting page based on the interface change instruction.

In an embodiment, the determination unit may be configured to:
when a difference between the exit time and the entry time is greater than a preset duration, determine that switching from the main interface to the first interface is use of the first interface once; and
determine the using frequency of the first interface according to the number of times of use of the first interface.

In an embodiment, the switching module may include:
a first switching submodule, configured to modify a first index of the main interface in a desktop configuration field in a global setting into a second index of the first interface; and the first display module may include:
a third display submodule, configured to, upon when the preset operation is detected under any user account, display the first interface.

In an embodiment, the switching module may include:
a second switching submodule, configured to modify a first index of the main interface in a desktop configuration field in a user setting of a target user account into a second index of the first interface; and
the first display module may include:
   a fourth display submodule, configured to, upon when the preset operation is detected under the target user account, display the first interface.

According to the method for page processing and device and the storage medium provided in the embodiments of the present disclosure, a first switching operation on a setting page is received from a user; a first interface is switched to a main interface based on the first switching operation, the first interface and the main interface being different interfaces before switching; and upon when the preset operation is detected, the first interface is displayed, the preset operation being used for instructing the terminal to display the main interface. In such a manner, through interface switching, the first interface may be directly displayed after the preset operation of the user is performed, so that convenience for a user is improved and a user experience is improved because of no need of manually switching by the user from the main interface that is displayed as a default to the first interface after the preset operation is carried out.

It is to be understood that the above general descriptions and detailed descriptions below are only exemplary and explanatory and not intended to limit the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
Fig. 1 is a structure diagram of a wireless communication system according to an exemplary embodiment.
Fig. 2 is a flow chart illustrating a method for page processing according to an exemplary embodiment.
Fig. 3 is a structure diagram of composition of a device for page processing according to an exemplary embodiment.
Fig. 4 is a structure diagram of composition of another device for page processing according to an exemplary embodiment.
Fig. 5 is a structure diagram of composition of yet another device for page processing according to an exemplary embodiment.
Fig. 6 is a structure diagram of composition of still another device for page processing according to an exemplary embodiment.
Fig. 7 is a structure diagram of composition of still another device for page processing according to an exemplary embodiment.
Fig. 8 is a structure diagram of composition of still another device for page processing according to an exemplary embodiment.
Fig. 9 is a structure diagram of composition of still another device for page processing according to an exemplary embodiment.
Fig. 10 is a structure diagram of composition of still another device for page processing according to an exemplary embodiment.
Fig. 11 is a block diagram of a device for page processing according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the embodiments of the present disclosure. Instead, they are merely examples of apparatuses and methods consistent with aspects related to the embodiments of the present disclosure as recited in the appended claims.

Terminologies used in the embodiments of the present disclosure are only adopted for the purpose of describing specific embodiments and not intended to limit the embodiments of the present disclosure. The singular terminologies "a/an", "said" and "the" in the embodiments of the present disclosure and the appended claims are also intended to represent plurality, unless other meanings are clearly denoted throughout the present disclosure. It is also to be understood that terminology "and/or" used in the present disclosure refers to and includes one or any or all possible combinations of multiple associated items that are listed.

It is to be understood that, although terminologies first, second, third and the like may be adopted to describe various information in the embodiments of the present disclosure, the information should not be limited to these terminologies. These terminologies are only adopted to distinguish the information of the same type. For example, without departing from the scope of the embodiments of the present disclosure, first information may also be called second information and, similarly, second information may also be called first information. For example, terminology "if" used herein may be explained as "while" or "when" or "responsive to determining", which depends on the context.

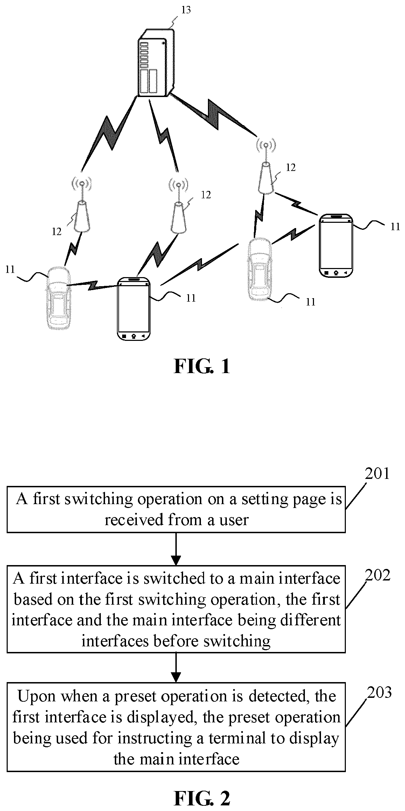

Referring to Fig. 1, a structure diagram of a wireless communication system provided in an embodiment of the present disclosure is illustrated. As shown in Fig. 1, the wireless communication system is a cellular mobile communication technology-based communication system. The wireless communication system may include a plurality of terminals 11 and a plurality of base Stations (STAs) 12.

The terminal 11 may refer to a device for providing voice and/or data connectivity for a user. The terminal 11 may communicate with one or more core networks through a Radio Access Network (RAN). The terminal 11 may be an Internet of things terminal, for example, a sensor device, a mobile phone (or called a "cell" phone) and a computer with an Internet of things terminal. For example, the terminal 11 may be a fixed, portable, pocket-sized, handheld, computer-embedded or vehicle-mounted device, for example, an STA, a subscriber unit, a subscriber STA, a mobile STA, a mobile, a remote STA, an access point, a remote terminal, an access terminal, a user terminal, a user agent, a user device or User Equipment (UE). Or, the terminal 11 may also be a device of an unmanned aerial vehicle. Or, the terminal 11 may also be a vehicle-mounted device and, for example, may be a trip computer with a wireless communication function or a wireless communication device connected with an external trip computer. Or, the terminal 11 may also be a roadside unit and, for example, may be a street lamp, a signal lamp or other roadside units with the wireless communication function.

The base STA 12 may be a network-side device in a wireless communication system. The wireless communication system may be a 4th Generation mobile communication (4G) system, also called a Long Term Evolution (LTE) system. Or, the wireless communication system may also be a 5th-Generation (5G) system, also called a New Radio (NR) or 5G NR system. Or, the wireless communication system may also be a next-generation system of the 5G system. An access network in the 5G system is called a New Generation-Radio Access Network (NG-RAN), or, a Machine Type Communication (MTC) system.

The base STA 12 may be an Evolved Node B (eNB) in the 4G system. Or, the base STA 12 may also be a gNB adopting a central distributed architecture in the 5G system. The base STA 12, when adopting the central distributed architecture, usually includes a Central Unit (CU) and at least two Distributed Units (DUs). Protocol stacks of a Packet Data Convergence Protocol (PDCP) layer, a Radio Link Control (RLC) layer and a Media Access Control (MAC) layer are arranged in the CU. A protocol stack of a Physical (PHY) layer is arranged in the DU. A specific implementation of the base STA 12 is not limited in the embodiment of the present disclosure.

The base STA 12 may establish a wireless connection with the terminal 11 through a radio interface. In different implementation modes, the radio interface may be a 4G-standard-based radio interface; or, the radio interface may be a 5G-standard-based radio interface, for example, the radio interface is an NR interface; or, the radio interface may also be a radio interface based on a next-generation mobile communication network technology standard of 5G.

In some embodiments, the terminals 11 may also establish End to End (E2E) connections with one another, for example, Vehicle to Vehicle (V2C) communication, Vehicle to Infrastructure (V2I) communication, Vehicle to Pedestrian (V2P) communication and the like in Vehicle to Everything (V2X).

In some embodiments, the wireless communication system may further include a network management device 13.

The plurality of base STAs 12 are connected with the network management device 13 respectively. The network management device 13 may be a core network device in the wireless communication system. For example, the network management device 13 may be a Mobility Management Entity (MME) in an Evolved Packet Core (EPC). Or, the network management device may also be other core network devices, for example, a Serving GateWay (SGW), a Public Data Network GateWay (PGW), a Policy and Charging Rules Function (PCRF) or a Home Subscriber Server (HSS). An implementation of the network management device 13 is not limited in the embodiment of the present disclosure.

An execution body involved in the embodiment of the present disclosure includes, but not limited to, a mobile terminal.

Fig. 2 is a flow chart illustrating a method for page processing according to an exemplary embodiment. As shown in Fig. 2, the method for page processing may be applied to a terminal and includes the following steps.

In Step 201, a first switching operation on a setting page is received from a user.

In Step 202, a first interface is switched to a main interface based on the first switching operation, the first interface and the main interface being different interfaces before the first switching operation is performed.

In Step 203, upon when a preset operation is detected, the first interface is displayed, the preset operation being for instructing a terminal to display the main interface.

The setting page may be a page on which the terminal displays prompting information to a user and provides an operation option. A prompting content of the prompting information may be information asking the user for opinions and the like such as "whether to confirm desktop replacement or not" or "whether to enable an automatic desktop replacement function or not". The user may confirm or cancel an operation through the operation option.

The first switching operation may be an operation of determining interface switching.

The main interface may be a default desktop of the terminal, and the first interface may be any other interface than the default display desktop of the terminal.

Switching between the main interface and the first interface may be carried out through a finger swipe operation and the like of the user over a screen of the terminal.

The preset operation may refer to an operation that the terminal returns to the main interface from any interface, for example, a user operation on a home button, or a finger swipe operation of returning to the desktop, or a closing operation of exiting from an APP to a main interface, or an operation of starting the terminal.

Here, the first interface is switched to the main interface through the first switching operation, namely the first interface is set as the desktop. After switching, upon when preset operations, such as starting the terminal and clicking the home button, are executed, the terminal may directly display the first interface without need of manually switching the main interface that is displayed as a default to the first interface after the preset operation is performed, so that convenience is improved for the user, and a user experience is improved. Moreover, operations unauthorized by the user may be reduced through confirmation of the user.

The method further includes that: before the first switching operation on the setting page is received from the user, the setting page is displayed.

In an embodiment, before the first interface is switched to the main interface, the first interface may be a MinusOneScreenView interface.

The MinusOneScreenView interface may be an interface of the terminal, which is displayed as the desktop after a switching operation such as a rightward swipe is performed on the default desktop.

The user may actively enter the setting page to make a setting, or displaying of the setting page is triggered according to a triggering event. The triggering event is that the time for operating the first interface exceeds a preset time length.

The setting page may be displayed on the first interface by popping up prompting information or by other ways to prompt the user whether to determine desktop replacement or not or whether to enable the automatic desktop replacement function or not. The setting page may also be displayed on the full screen. The desktop prompting information may be popped up on the first interface, and after the user confirms desktop replacement, a desktop content may still be the first interface. In a situation that desktop prompting information is popped up on the main interface presently operated by the user, the desktop may be switched to the first interface after the user confirms desktop replacement, while the user is needed to execute a swipe operation to return to the main interface and thus an additional operation is required. Popping up desktop prompting information on the first interface can reduce unnecessary operations and improve the user experience.

In an embodiment, the operation that the setting page is displayed may include that: a second switching operation is detected; the main interface is switched to the first interface based on the second switching operation, and switching information about the switching from the main interface to the first interface is recorded; and when the switching information meets a preset condition, the setting page is displayed.

The second switching operation may be a leftward or rightward swipe and the like operation of the user on the screen of the terminal. When the second switching operation is executed, the terminal may be switched from the main interface to the first interface. For example, the main interface is the presently displayed interface, the first interface is the MinusOneScreenView interface, and the MinusOneScreenView interface becomes a displayed interface through a rightward swipe of the finger of the user on the screen of the terminal. Here, the rightward swipe is the second switching operation. The main interface may be displayed again through a leftward swipe of the finger of the user on the screen of the terminal.

A touch screen in the terminal may sense the second switching operation, and a processor and the like may make a response to the second switching operation.

The switching information may be the number of times, duration, frequency and the like of the switching from the main interface to the first interface. The switching information may also be a ratio of a duration of staying on the first interface relative to a duration of staying on any other interface within a predetermined time bucket, based on entry time and exit time of the first interface.

The preset condition may be set according to an operation habit of the user and the like. For example, a longest display duration is determined from the display durations of pages for the user as a display duration threshold. When a display duration, obtained according to the switching information, of the first interface is greater than the display duration threshold, the setting page is displayed. The user determines whether to replace the main interface with the first interface as the default desktop or not.

According to the operation habit of the user, upon when the switching information, such as the switching time of the first interface, for the user meets the preset condition, the setting page is displayed, and the user determines to replace the main interface with the first interface as the default desktop. After the first interface is switched to the main interface, the first interface may be directly displayed after the user clicks the home button or executes other preset operations. Accordingly, without the step that the user manually switches the main interface that is displayed as a default to the first interface after the preset operation is performed, convenience is improved for the user, and the user experience is improved.

In an embodiment, the operation that the setting page is displayed when the switching information meets the preset condition may include that: when a using frequency, determined based on the switching information, of the first interface meets the preset condition, the setting page is displayed.

Here, the using frequency meeting the preset condition may be that the using frequency exceeds a using frequency threshold, etc. For example, when the using frequency of the first interface exceeds the preset frequency threshold, the setting page is displayed. The using frequency of the first interface may also be compared with a using frequency of another page to obtain a difference, and if the difference exceeds the preset frequency threshold, the setting page is displayed.

In an embodiment, the operation that the switching information about the switching from the main interface to the first interface is recorded may include that:
information about entry time is recorded about the switching from the main interface to the first interface; and the method may further include that: exit time information is recorded about exit from the first interface, the using frequency of the first interface being determined according to the information about the entry time and the information about the exit time.

Here, the using frequency of the first interface may be determined according to the information about the entry time and the information about the exit time in multiple manners. For example, formation of a piece of information about entry time is determined as use of the first interface once, or, formation of information about adjacent entry time and exit time is determined as use of the first interface once. The number of times of use of the first interface within a preset time may be determined as the using frequency of the first interface.

In an embodiment, the method may further include that: the information about the entry time and the information about the exit time are reported to a server, and an interface change instruction sent by the server when determining according to the information about the entry time and the information about the exit time that the using frequency of the first interface meets the preset condition is received; and the operation that the setting page is displayed when the using frequency, determined based on the switching information, of the first interface meets the preset condition may include that: the setting page is displayed based on the interface change instruction.

The server may be local, or may be located at a network such as cloud.

The operation habit, such as the information about the entry time and the information about the exit time, of the user is reported to the server, and the server determines the using frequency of the first interface and sends a desktop change instruction. Whether the preset condition that is presently adopted meets the using habit of the user or not may be determined in combination with a historical record. For example, whether a present frequency value truly reflects a requirement of the user on a desktop display page or not may be determined. The preset condition may be dynamically adjusted to improve accuracy of an alternative desktop recommended to the user.

The terminal reports the operation habit such as the information about the entry time and exit time information of the first interface to the server through a network and the like. The server, when determining according to the information reported by the terminal that the using frequency of the first interface meets the preset condition, sends the desktop change instruction to the terminal through the network and the like. The terminal, after receiving the desktop change instruction, may request for confirmation of the user through the setting page. If the user confirms, the terminal replaces the main interface with the first interface and displays the first interface as the desktop.

In an embodiment, the operation that the using frequency of the first interface is determined according to the information about the entry time and the information about the exit time may include that: if a difference between exit time and entry time is greater than a preset duration, it is determined that the switching from the main interface to the first interface is use of the first interface once; and the using frequency of the first interface is determined according to the number of times of use of the first interface.

Here, the difference between the entry time and the exit time may be considered as stay time of the user on the first interface, and when the stay time is longer than a preset duration, it is considered that the user is using the first interface rather than reaching to any other interface through the first interface or making a misoperation on the first interface.

The number of times of use of the first interface within a preset time bucket may be determined as the using frequency of the first interface. The preset time bucket may be a day, a week or the like and may be defined according to the operation habit of the user.

In an embodiment, the operation that the first interface is switched to the main interface may include that: a first index of the main interface in a desktop configuration field in a global setting is modified into a second index of the first interface; and the operation that the first interface is displayed when the preset operation is detected may include that: upon when the preset operation is detected under any user account, the first interface is displayed.

During a specific application, both the first interface and the main interface have corresponding indexes. For example, the index of the main interface, i.e., the default desktop display page, is "1", and the first interface is a MinusOneScreenView and has the index "-1". The index "-1" of the MinusOneScreenView may be set in the global setting, and the desktop is notified to modify the MinusOneScreenView. When the user presses the home button or restarts a mobile phone next time, a system reads the index of the desktop from the global setting, and if it is "-1", a page of which an index is "-1" is set as the desktop in a desktop launcher.

Here, setting made through the global setting may replace the desktop for each user account which is logged in at the terminal.

In an embodiment, the operation that the first interface is switched to the main interface may include that:
the first index of the main interface in a desktop configuration field in a user setting of a target user account is modified into the second index of the first interface; and
the operation that the first interface is displayed upon when the preset operation is detected may include that:
   upon when the preset operation is detected under the target user account, the first interface is displayed.

During a specific application, both the first interface and the main interface have corresponding indexes. For example, the index of the main interface, i.e., the present desktop display page, is "1", and the first interface is the MinusOneScreenView and has the index "-1". The index "-1" of the MinusOneScreenView may be set in the user setting, and the desktop is notified to modify the MinusOneScreenView. When the user presses the home button or restarts the mobile phone next time, the system reads the index of the desktop from the user setting, and if it is "-1", the page of which the index is "-1" is set as the desktop in the launcher.

Here, setting made through the target user account may replace the desktop for the user which is logging in the terminal.

Combining the global setting and the user setting may flexibly replace the desktop page for all users or a single user for adaptation to different application scenarios.

In an embodiment, the method may further include that: before the first interface is switched to the main interface, the main interface is switched to the first interface based on a first swipe instruction which acts on the main interface and of which a swipe direction is a first direction. When the first interface is switched to the main interface, the first interface is switched to the main interface based on a second swipe instruction which acts on the first interface and of which a swipe direction is a second direction, the second direction being an opposite direction of the first direction; or, when the first interface is switched to the main interface, the first interface is switched to the main interface based on the second swipe instruction which acts on the first interface and of which the swipe direction is the first direction.

After the first interface is switched to the main interface, the first interface is a desktop display page, and the main interface is an un-displayed page.

Under a circumstance, pages of the terminal are sequentially and non-cyclically displayed through swipe operations and the like, namely the pages may be switched from the first page to the last page one by one through the swipe operations in the same direction and, when the last page is reached, inverse operations may be executed to switch the pages from the last page to the first page one by one. Under this circumstance, if the main interface is switched to the first interface through the first swipe instruction in the first direction, then the first interface is required to be switched to the main interface through the second swipe instruction in the second direction opposite to the first direction after the first interface replaces the main interface.

Under another circumstance, the pages of the terminal may be cyclically displayed through swipe operations and the like, namely the pages may be switched from the first page to the last page one by one through the swipe operations in the same direction and, when the last page is reached, operations are still executed in the same direction to directly switch the last page back to the first page. Under this circumstance, if the main interface is switched to the first interface through the first swipe instruction in the first direction, then the first interface may still be switched to the main interface through the second swipe instruction in the first direction after the first interface replaces the main interface. The first swipe instruction and the second swipe instruction may be the same instruction, and "first" and "second" are only adopted to distinguish two swipe instructions.

A specific example will be provided below in combination with any above-mentioned embodiment.

When the user invokes the MinusOneScreenView, a client may record and report a difference of entry and exit time of the user to the server. The server stores this record of the device into a database and then queries a historical record of the user to evaluate whether the user uses the MinusOneScreenView at a high frequency or not. When a certain frequency is met, a value "true" is returned to indicate whether to prompt the user to set the MinusOneScreenView as a main screen or not next time when the user invokes the MinusOneScreenView. The device pops up a user interface to request the user for confirming whether to adopt an intelligent desktop setting or not. For example, a button "try" is displayed, and after the user clicks "try", a user result is reported to the server. The MinusOneScreenView stores such a setting in the global setting, and the desktop is notified to modify the MinusOneScreenView as the main screen. After the user presses Home and restarts the mobile phone next time, the desktop reads the index of the main screen from the setting, and if it is -1, MinusOneScreenView in the launcher is determined as the view of which the index is -1 in the launcher. The main screen is the default desktop display page, under which state the MinusOneScreenView is a page displayed on the desktop through a rightward swipe operation of the user.

The operation habit of the user is reported to the server as a default for the purpose of dynamically adjusting a threshold about whether the user is a high-frequency user or not to improve the accuracy of the recommended alternative main screen.

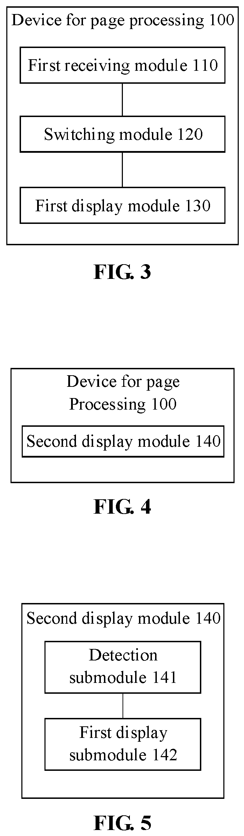

Fig. 3 is a block diagram of a device 100 for page processing according to an exemplary embodiment. Referring to Fig. 3, the device includes a first receiving module 110, a switching module 120 and a first display module 130, wherein
the first receiving module 110 is configured to receive a first switching operation on a setting page from a user;
the switching module 120 is configured to switch a first interface to a main interface based on the first switching operation, the first interface and the main interface being different interfaces before switching; and
the first display module 130 is configured to, responsive to that a preset operation is detected, display the first interface, the preset operation being used for instructing a terminal to display the main interface.

As shown in Fig. 4, the device 100 further includes:
a second display module 140, configured to, before the first switching operation on the setting page is received from the user, display the setting page.

In an embodiment, before the first interface is switched to the main interface, the first interface may be a MinusOneScreenView interface.

In an embodiment, as shown in Fig. 5, the second display module 140 may further include:
a detection submodule 141, configured to detect a second switching operation, switch the main interface to the first interface based on the second switching operation and record switching information about switching from the main interface to the first interface; and
a first display submodule 142, configured to, when the switching information meets a preset condition, display the setting page.

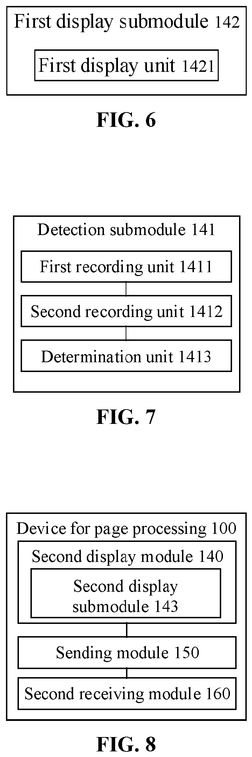

In an embodiment, as shown in Fig. 6, the first display submodule 142 may include:
a first display unit 1421, configured to, when a using frequency, determined based on the switching information, of the first interface meets the preset condition, display the setting page.

In an embodiment, as shown in Fig. 7, the detection submodule 141 may include:
a first recording unit 1411, configured to record information about entry time of switching from the main interface to the first interface;
a second recording unit 1412, configured to record information about exit time of exiting from the first interface; and
a determination unit 1413, configured to determine the using frequency of the first interface according to the information about the entry time and the information about the exit time.

In an embodiment, as shown in Fig. 8, the device 100 may further include:
a sending module 150, configured to report the information about the entry time and the information about the exit time to a server, and
a second receiving module 160, configured to receive an interface change instruction which is sent by the server when determining according to the information about the entry time and the information about the exit time that the using frequency of the first interface meets the preset condition.

The second display module 140 may further include:
a second display submodule 143, configured to display the setting page based on the interface change instruction.

In an embodiment, the determination unit 1413 is configured to:
when a difference between exit time and entry time is greater than a preset duration, determine that switching from the main interface to the first interface is use of the first interface once; and
determine the using frequency of the first interface according to the number of times of use of the first interface.

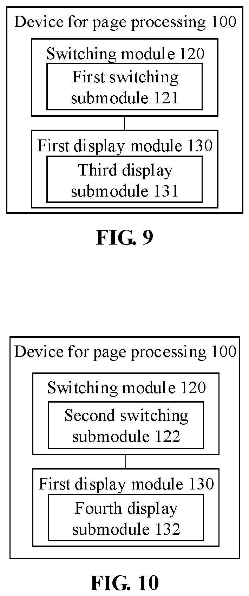

In an embodiment, as shown in Fig. 9, the switching module 120 may include:
a first switching submodule 121, configured to modify a first index of the main interface in a desktop configuration field in a global setting into a second index of the first interface.

The first display module 130 may include:
a third display submodule 131, configured to, upon when the preset operation is detected under any user account, display the first interface.

In an embodiment, as shown in Fig. 10, the switching module 120 may include:
a second switching submodule 122, configured to modify the first index of the main interface in a desktop configuration field in a user setting of a target user account into the second index of the first interface.

The first display module 130 may include:
a fourth display submodule 132, configured to, upon when the preset operation is detected under the target user account, display the first interface.

With respect to the device in the above embodiment, the manners for performing operations by individual modules therein have been described in detail in the embodiment of the method, which will not be elaborated herein.

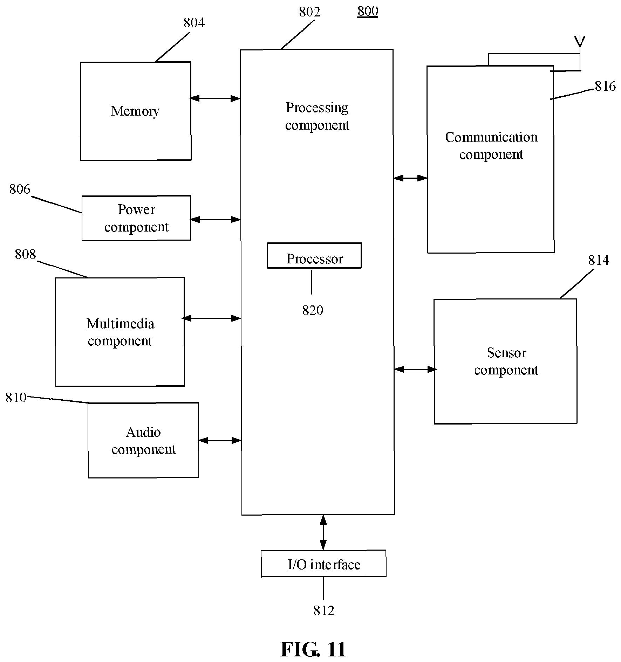

Fig. 11 is a block diagram of a display terminal device 800 according to an exemplary embodiment. For example, the device 800 may be a mobile phone, a computer, a digital broadcast terminal, a messaging device, a gaming console, a tablet, a medical device, exercise equipment, a personal digital assistant and the like.

Referring to Fig. 11, the device 800 may include one or more of the following components: a processing component 802, a memory 804, a power component 806, a multimedia component 808, an audio component 810, an Input/Output (I/O) interface 812, a sensor component 814, and a communication component 816.

The processing component 802 is typically configured to control overall operations of the device 800, such as the operations associated with display, telephone calls, data communications, camera operations, and recording operations. The processing component 802 may include one or more processors 820 to execute instructions to perform all or part of the steps in the above-mentioned method. Moreover, the processing component 802 may include one or more modules which facilitate interaction between the processing component 802 and other components. For instance, the processing component 802 may include a multimedia module to facilitate interaction between the multimedia component 808 and the processing component 802.

The memory 804 is configured to store various types of data to support the operation of the device 800. Examples of such data include instructions for any APP programs or methods operated on the device 800, contact data, phonebook data, messages, pictures, video, etc. The memory 804 may be implemented by any type of volatile or non-volatile memory devices, or any combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, and a magnetic or optical disk.

The power component 806 is for providing power for various components of the device 800. The power component 806 may include a power management system, one or more power supplies, and other components associated with generation, management and distribution of power for the device 800.

The multimedia component 808 may include a screen for providing an output interface between the device 800 and a user. In some embodiments, the screen may include a Liquid Crystal Display (LCD) and a Touch Panel (TP). In a case that the screen includes the TP, the screen may be implemented as a touch screen to receive an input signal from a user. The TP may include one or more touch sensors to sense touches, swipes and gestures on the TP. The touch sensors may not only sense a boundary of a touch or swipe action but also detect a duration and pressure associated with the touch or swipe action. In some embodiments, the multimedia component 808 may include a front camera and/or a rear camera. The front camera and/or the rear camera may receive external multimedia data when the device 800 is in an operation mode, such as a photographing mode or a video mode. Each of the front camera and the rear camera may be a fixed optical lens system or have capabilities in focusing and optical zooming.

The audio component 810 is configured to output and/or input an audio signal. For example, the audio component 810 may include a Microphone (MIC), and the MIC is configured to receive an external audio signal when the device 800 is in the operation mode, such as a calling mode, a recording mode and a voice recognition mode. The received audio signal may further be stored in the memory 804 or sent through the communication component 816. In some embodiments, the audio component 810 may further include a speaker configured to output the audio signal.

The I/O interface 812 is for providing an interface between the processing component 802 and a peripheral interface module, and the peripheral interface module may be a keyboard, a click wheel, a button and the like. The button may include, but not limited to: a home button, a volume button, a starting button and a locking button.

The sensor component 814 may include one or more sensors configured to provide status assessment in various aspects for the device 800. For instance, the sensor component 814 may detect an on/off status of the device 800 and relative positioning of components, such as a display and a small keyboard of the device 800, and the sensor component 814 may further detect a change in a position of the device 800 or a component of the device 800, presence or absence of contact between the user and the device 800, orientation or acceleration/deceleration of the device 800 and a change in temperature of the device 800. The sensor component 814 may include a proximity sensor configured to detect presence of an object nearby without any physical contact. The sensor component 814 may also include a light sensor, such as a Complementary Metal Oxide Semiconductor (CMOS) or Charge Coupled Device (CCD) image sensor, configured for use in an imaging APP. In some embodiments, the sensor component 814 may also include an acceleration sensor, a gyroscope sensor, a magnetic sensor, a pressure sensor or a temperature sensor.

The communication component 816 is configured to facilitate wired or wireless communication between the device 800 and other equipment. The device 800 may access a communication-standard-based wireless network, such as a Wireless Fidelity (WiFi) network, a 2nd-Generation (2G) or 3rd-Generation (3G) network or any combination thereof. In an exemplary embodiment, the communication component 816 is configured to receive a broadcast signal or broadcast associated information from an external broadcast management system through a broadcast channel. In an exemplary embodiment, the communication component 816 may further include a Near Field Communication (NFC) module to facilitate short-range communication. For example, the NFC module may be implemented based on a Radio Frequency Identification (RFID) technology, an Infrared Data Association (IrDA) technology, an Ultra-WideBand (UWB) technology, a Bluetooth (BT) technology and other technologies.

In an exemplary embodiment, the device 800 may be implemented by one or more ASICs, DSPs, Digital Signal Processing Devices (DSPDs), Programmable Logic Devices (PLDs), Field Programmable Gate Arrays (FPGAs), controllers, micro-controllers, microprocessors or other electronic components, and is configured to execute the above-mentioned method.

In an exemplary embodiment, there is also provided a non-transitory computer-readable storage medium including an instruction, such as the memory 804 including an instruction, and the instruction may be executed by the processor 820 of the device 800 to implement the above-mentioned method. For example, the non-transitory computer-readable storage medium may be a ROM, a Random Access Memory (RAM), a Compact Disc Read-Only Memory (CD-ROM), a magnetic tape, a floppy disc, an optical data storage device and the like.

According to a non-transitory computer-readable storage medium, when an instruction in the storage medium is executed by a processor of a mobile terminal to enable the mobile terminal to execute the steps of the method for page processing.

Other implementation solutions of the present disclosure will be apparent to those skilled in the art from the specification and practice of the present disclosure. This application is intended to cover any variations, uses, or adaptations of the present disclosure, which follow the general principles thereof and include such departures from the present disclosure as come within known or customary practice in the art. It is intended that the specification and examples be considered as exemplary only, with a true scope of the present disclosure being indicated by the following claims.

It will be appreciated that the present disclosure is not limited to the exact construction that has been described above and illustrated in the accompanying drawings, and that various modifications and changes may be made without departing from the scope thereof. It is intended that the scope of the present disclosure only be limited by the appended claims.

## Claims

1. A method for page processing, implemented by a computer, the method comprising:
displaying a setting page;
receiving (201) a first switching operation on the setting page from a user;
switching (202) a first interface to a main interface based on the first switching operation, the first interface and the main interface being different interfaces before switching, wherein switching the first interface to the main interface is setting the first interface as the main interface; and
upon when a preset operation is detected, displaying (203) the first interface, wherein the preset operation is used for instructing a terminal to display the main interface,
**characterized in that**,
displaying of the setting page is triggered according to a triggering event, wherein the triggering event is that time for operating the first interface exceeds a preset time length.

2. The method of claim 1, wherein the first interface is a MinusOneScreenView interface which is displayed as a desktop after a switching operation such as a rightward swipe is performed on a default desktop.

3. The method of claim 2, wherein displaying the setting page comprises:
detecting a second switching operation;
switching the main interface to the first interface based on the second switching operation,
recording switching information about switching from the main interface to the first interface; and
upon when the switching information meets a preset condition, displaying the setting page.

4. The method of claim 3, wherein displaying the setting page upon when the switching information meets the preset condition comprises:
upon when a using frequency, determined based on the switching information, of the first interface meets the preset condition, displaying the setting page.

5. The method of claim 4, wherein recording the switching information about switching from the main interface to the first interface comprises:
recording information about entry time of switching from the main interface to the first interface; and
the method further comprises:
recording information about exit time of exiting from the first interface,
wherein the using frequency of the first interface is determined according to the information about the entry time and the information about the exit time.

6. The method of claim 5, further comprising:
reporting the information about the entry time and the information about the exit time to a server; and
receiving an interface change instruction which is sent by the server when the using frequency of the first interface is determined according to the information about the entry time and the information about the exit time to meet the preset condition,
wherein displaying the setting page when the using frequency, determined based on the switching information, of the first interface meets the preset condition comprises: displaying the setting page based on the interface change instruction.

7. The method of claim 5 or 6, wherein determining the using frequency of the first interface according to the information about the entry time and the information about the exit time comprises:
when a difference between the exit time and the entry time is greater than a preset duration, determining that switching from the main interface to the first interface is use of the first interface once; and
determining the using frequency of the first interface according to the number of times of use of the first interface.

8. The method of any one of claims 1-6, wherein
switching the first interface to the main interface comprises:
modifying a first index of the main interface in a desktop configuration field in a global setting into a second index of the first interface; or
modifying a first index of the main interface in a desktop configuration field in a user setting of a target user account into a second index of the first interface;
displaying the first interface upon when the preset operation is detected comprises:
upon when the preset operation is detected under any user account, displaying the first interface; or
upon when the preset operation is detected under the target user account, displaying the first interface.

9. A device for page processing, comprising a first receiving module (110), a switching module (120), a first display module (130), and a second display module (140), wherein
the first receiving module (110) is configured to receive a first switching operation on a setting page from a user;
the switching module (120) is configured to switch a first interface to a main interface based on the first switching operation, the first interface and the main interface being different interfaces before switching, wherein switching the first interface to the main interface is setting the first interface as the main interface;
the first display module (130) is configured to, upon when a preset operation is detected, display the first interface, the preset operation being used for instructing a terminal to display the main interface; and
the second display module (140) is configured to, before the first switching operation on the setting page is received from the user, display the setting page,
**characterized in that**,
displaying the setting page is triggered according to a triggering event, wherein the triggering event is that time for operating the first interface exceeds a preset time length.

10. The device of claim 9, wherein before the first interface is switched to the main interface, the first interface is a MinusOneScreenView interface which is displayed as a desktop after a switching operation such as a rightward swipe is performed on a default desktop.

11. The device of claim 10, wherein the second display module further comprises:
a detection submodule (141), configured to detect a second switching operation, switch the main interface to the first interface based on the second switching operation, and record switching information about switching from the main interface to the first interface; and
a first display submodule (142), configured to, upon when the switching information meets a preset condition, display the setting page.

12. The device of claim 11, wherein the first display submodule (142) comprises:
a first display unit (1421), configured to, upon when a using frequency, determined based on the switching information, of the first interface meets the preset condition, display the setting page.

13. The device of claim 12, wherein the detection submodule (141) comprises:
a first recording unit (1411), configured to record information about entry time of switching from the main interface to the first interface;
a second recording unit (1412), configured to record information about exit time of exiting from the first interface; and
a determination unit (1413), configured to determine the using frequency of the first interface according to the information about the entry time and the information about the exit time.

14. The device of claim 13, further comprising:
a sending module (150), configured to report the information about the entry time and the information about the exit time to a server; and
a second receiving module (160), configured to receive an interface change instruction which is sent by the server when the using frequency of the first interface is determined according to the information about the entry time and the information about the exit time to meet the preset condition, wherein
the second display module (140) further comprises:
a second display submodule (143), configured to display the setting page based on the interface change instruction;
the determination unit (1413) is configured to:
when a difference between the exit time and the entry time is greater than a preset duration, determine that switching from the main interface to the first interface is use of the first interface once; and
determine the using frequency of the first interface according to the number of times of use of the first interface.

15. The device of any one of claims 9-14, wherein
the switching module (120) comprises:
a first switching submodule (121), configured to modify a first index of the main interface in a desktop configuration field in a global setting into a second index of the first interface; or
a second switching submodule (122), configured to modify a first index of the main interface in a desktop configuration field in a user setting of a target user account into a second index of the first interface;
the first display module (130) comprises:
a third display submodule (131), configured to, upon when the preset operation is detected under any user account, display the first interface; or
a fourth display submodule (132), configured to, upon when the preset operation is detected under the target user account, display the first interface.

## Patentansprüche

1. Verfahren zur Seitenverarbeitung, das von einem Computer implementiert wird, wobei das Verfahren umfasst:
Anzeigen einer Einstellungsseite;
Empfangen (201) eines ersten Schaltvorgangs auf der Einstellungsseite von einem Benutzer;
Schalten (202) einer ersten Schnittstelle zu einer Hauptschnittstelle basierend auf dem ersten Schaltvorgang, wobei die erste Schnittstelle und die Hauptschnittstelle vor dem Schalten unterschiedliche Schnittstellen sind, wobei das Schalten der ersten Schnittstelle zur Hauptschnittstelle das Einstellen der ersten Schnittstelle als die Hauptschnittstelle ist; und
wenn ein voreingestellter Vorgang erkannt wird, Anzeigen (203) der ersten Schnittstelle, wobei der voreingestellte Vorgang verwendet wird, um ein Endgerät anzuweisen, die Hauptschnittstelle anzuzeigen,
**dadurch gekennzeichnet, dass**
das Anzeigen der Einstellungsseite entsprechend einem Auslöseereignis ausgelöst wird, wobei das Auslöseereignis darin besteht, dass die Zeit für die Betätigung der ersten Schnittstelle eine voreingestellte Zeitdauer überschreitet.

2. Verfahren nach Anspruch 1, wobei die erste Schnittstelle eine MinusOneScreenView-Schnittstelle ist, die als Desktop angezeigt wird, nachdem ein Schaltvorgang, wie z. B. ein Wischen nach rechts, auf einem Standard-Desktop durchgeführt wurde.

3. Verfahren nach Anspruch 2, wobei das Anzeigen der Einstellungsseite umfasst:
Erkennen eines zweiten Schaltvorgangs;
Schalten der Hauptschnittstelle zur ersten Schnittstelle basierend auf dem zweiten Schaltvorgang,
Aufzeichnen von Schaltinformationen zum Schalten von der Hauptschnittstelle zur ersten Schnittstelle; und
wenn die Schaltinformationen eine vorgegebene Bedingung erfüllen, Anzeigen der Einstellungsseite.

4. Verfahren nach Anspruch 3, wobei das Anzeigen der Einstellungsseite, wenn die Schaltinformationen die vorgegebene Bedingung erfüllen, umfasst:
wenn eine Nutzungshäufigkeit, die basierend auf den Schaltinformationen bestimmt wird, der ersten Schnittstelle die vorgegebene Bedingung erfüllt, Anzeigen der Einstellungsseite.

5. Verfahren nach Anspruch 4, wobei das Aufzeichnen von Schaltinformationen zum Schalten von der Hauptschnittstelle zur ersten Schnittstelle umfasst:
Aufzeichnen von Informationen zur Eintrittszeit des Schaltens von der Hauptschnittstelle zur ersten Schnittstelle; und
wobei das Verfahren ferner umfasst:
Aufzeichnen von Informationen zur Austrittszeit beim Verlassen der ersten Schnittstelle,
wobei die Nutzungshäufigkeit der ersten Schnittstelle gemäß den Informationen zur Eintrittszeit und den Informationen zur Austrittszeit bestimmt wird.

6. Verfahren nach Anspruch 5, das ferner umfasst:
Melden der Informationen über die Eintrittszeit und der Informationen über die Austrittszeit an einen Server; und
Empfangen einer Schnittstellenänderungsanweisung, die von dem Server gesendet wird, wenn die Nutzungshäufigkeit der ersten Schnittstelle gemäß den Informationen zur Eintrittszeit und den Informationen zur Austrittszeit bestimmt wird, um die vorgegebene Bedingung zu erfüllen,
wobei das Anzeigen der Einstellungsseite, wenn die Nutzungshäufigkeit, die basierend auf den Schaltinformationen bestimmt wird, der ersten Schnittstelle die vorgegebene Bedingung erfüllt, umfasst: Anzeigen der Einstellungsseite basierend auf der Schnittstellenänderungsanweisung.

7. Verfahren nach Anspruch 5 oder 6, wobei das Bestimmen der Nutzungshäufigkeit der ersten Schnittstelle gemäß den Informationen zur Eintrittszeit und den Informationen zur Austrittszeit umfasst:
wenn eine Differenz zwischen der Austrittszeit und der Eintrittszeit größer als eine voreingestellte Dauer ist, Bestimmen, dass das Umschalten von der Hauptschnittstelle zur ersten Schnittstelle eine einmalige Nutzung der ersten Schnittstelle ist; und
Bestimmen der Nutzungshäufigkeit der ersten Schnittstelle gemäß der Anzahl der Nutzungen der ersten Schnittstelle.

8. Verfahren nach einem der Ansprüche 1-6, wobei
das Schalten der ersten Schnittstelle zur Hauptschnittstelle umfasst:
Ändern eines ersten Index der Hauptschnittstelle in einem Desktop-Konfigurationsfeld in einer globalen Einstellung in einen zweiten Index der ersten Schnittstelle; oder
Ändern eines ersten Index der Hauptschnittstelle in einem Desktop-Konfigurationsfeld in einer Benutzereinstellung eines Zielbenutzers in einen zweiten Index der ersten Schnittstelle;
wobei das Anzeigen der ersten Schnittstelle, wenn der voreingestellte Vorgang erkannt wird, umfasst:
wenn der voreingestellte Vorgang unter einem beliebigen Benutzerkonto erkannt wird, Anzeigen der ersten Schnittstelle; oder
wenn der voreingestellte Vorgang unter dem Ziel-Benutzerkonto erkannt wird, Anzeigen der ersten Schnittstelle.

9. Vorrichtung zur Seitenverarbeitung, die ein erstes Empfangsmodul (110), ein Schaltmodul (120), ein erstes Anzeigemodul (130) und ein zweites Anzeigemodul (140) aufweist, wobei
das erste Empfangsmodul (110) dazu ausgebildet ist, einen ersten Schaltvorgang auf einer Einstellungsseite von einem Benutzer zu empfangen;
das Schaltmodul (120) dazu ausgebildet ist, eine erste Schnittstelle zu einer Hauptschnittstelle basierend auf dem ersten Schaltvorgang zu schalten, wobei die erste Schnittstelle und die Hauptschnittstelle vor dem Schalten unterschiedliche Schnittstellen sind, wobei das Schalten der ersten Schnittstelle zur Hauptschnittstelle das Einstellen der ersten Schnittstelle als die Hauptschnittstelle ist;
das erste Anzeigemodul (130) dazu ausgebildet ist, die Hauptschnittstelle anzuzeigen, wenn ein voreingestellter Vorgang erkannt wird, die erste Schnittstelle anzuzeigen, wobei der voreingestellte Vorgang verwendet wird, um ein Endgerät anzuweisen; und
das zweite Anzeigemodul (140) dazu ausgebildet ist, die Einstellungsseite anzuzeigen, bevor der erste Schaltvorgang auf der Einstellungsseite von dem Benutzer empfangen wird,
**dadurch gekennzeichnet, dass**
das Anzeigen der Einstellungsseite entsprechend einem Auslöseereignis ausgelöst wird, wobei das Auslöseereignis darin besteht, dass die Zeit für die Betätigung der ersten Schnittstelle eine voreingestellte Zeitdauer überschreitet.

10. Vorrichtung nach Anspruch 9, wobei, bevor die erste Schnittstelle zur Hauptschnittstelle geschaltet wird, die erste Schnittstelle eine MinusOneScreenView-Schnittstelle ist, die als Desktop angezeigt wird, nachdem ein Schaltvorgang, wie z. B. ein Wischen nach rechts, auf einem Standard-Desktop durchgeführt wurde.

11. Vorrichtung nach Anspruch 10, wobei das zweite Anzeigemodul ferner aufweist:
ein Erkennungssubmodul (141), das dazu ausgebildet ist, einen zweiten Schaltvorgang zu erkennen, die Hauptschnittstelle basierend auf dem zweiten Schaltvorgang auf die erste Schnittstelle zu schalten und Schaltinformationen zum Schalten von der Hauptschnittstelle zur ersten Schnittstelle aufzuzeichnen; und
ein erstes Anzeigesubmodul (142), das dazu ausgebildet ist, die Einstellungsseite anzuzeigen, wenn die Schaltinformationen eine vorgegebene Bedingung erfüllen.

12. Vorrichtung nach Anspruch 11, wobei das erste Anzeigesubmodul (142) aufweist:
eine erste Anzeigeeinheit (1421), die dazu ausgebildet ist, die Einstellungsseite anzuzeigen, wenn eine Nutzungshäufigkeit, die basierend auf den Schaltinformationen bestimmt wird, der ersten Schnittstelle die vorgegebene Bedingung erfüllt.

13. Vorrichtung nach Anspruch 12, wobei das Erkennungssubmodul (141) aufweist:
eine erste Aufzeichnungseinheit (1411), die dazu ausgebildet ist, Informationen zur Eintrittszeit des Schaltens von der Hauptschnittstelle zur ersten Schnittstelle aufzuzeichnen;
eine zweite Aufzeichnungseinheit (1412), die dazu ausgebildet ist, Informationen zur Austrittszeit beim Verlassen der ersten Schnittstelle aufzuzeichnen; und
eine Bestimmungseinheit (1413), die dazu ausgebildet ist, die Nutzungshäufigkeit der ersten Schnittstelle gemäß den Informationen zur Eintrittszeit und den Informationen zur Austrittszeit zu bestimmen.

14. Vorrichtung nach Anspruch 13, die ferner aufweist:
ein Sendemodul (150), das dazu ausgebildet ist, die Informationen über die Eintrittszeit und die Informationen über die Austrittszeit an einen Server zu melden; und
ein zweites Empfangsmodul (160), das dazu ausgebildet ist, eine Schnittstellenänderungsanweisung zu empfangen, die von dem Server gesendet wird, wenn die Nutzungshäufigkeit der ersten Schnittstelle gemäß den Informationen zur Eintrittszeit und den Informationen zur Austrittszeit bestimmt wird, um die vorgegebene Bedingung zu erfüllen, wobei
das zweite Anzeigemodul (140) ferner aufweist:
ein zweites Anzeigesubmodul (143), das dazu ausgebildet ist, die Einstellungsseite basierend auf der Schnittstellenänderungsanweisung anzuzeigen;
wobei die Bestimmungseinheit (1413) für Folgendes ausgebildet ist:
wenn eine Differenz zwischen der Austrittszeit und der Eintrittszeit größer als eine voreingestellte Dauer ist, Bestimmen, dass das Umschalten von der Hauptschnittstelle zur ersten Schnittstelle eine einmalige Nutzung der ersten Schnittstelle ist; und
Bestimmen der Nutzungshäufigkeit der ersten Schnittstelle gemäß der Anzahl der Nutzungen der ersten Schnittstelle.

15. Vorrichtung nach einem der Ansprüche 9-14, wobei
das Schaltmodul (120) aufweist:
ein erstes Schaltsubmodul (121), das dazu ausgebildet ist, einen ersten Index der Hauptschnittstelle in einem Desktop-Konfigurationsfeld in einer globalen Einstellung in einen zweiten Index der ersten Schnittstelle zu ändern; oder
ein zweites Schaltsubmodul (122), das dazu ausgebildet ist, einen ersten Index der Hauptschnittstelle in einem Desktop-Konfigurationsfeld in einer Benutzereinstellung eines Zielbenutzers in einen zweiten Index der ersten Schnittstelle zu ändern;
wobei das erste Anzeigemodul (130) aufweist:
ein drittes Anzeigesubmodul (131), das dazu ausgebildet ist, die erste Schnittstelle anzuzeigen, wenn der voreingestellte Vorgang unter einem beliebigen Benutzerkonto erkannt wird; oder
ein viertes Anzeigesubmodul (132), das dazu ausgebildet ist, die erste Schnittstelle anzuzeigen, wenn der voreingestellte Vorgang unter dem Ziel-Benutzerkonto erkannt wird.

## Revendications

1. Procédé de traitement de page, mis en œuvre par un ordinateur, le procédé comprenant:
l'affichage d'une page de définition;
la réception (201) d'une première opération de basculement sur la page de définition d'un utilisateur;
le basculement (202) d'une première interface vers une interface principale sur la base de la première opération de basculement, la première interface et l'interface principale étant des interfaces différentes avant le basculement, où le basculement de la première interface vers l'interface principale est la définition de la première interface comme interface principale; et
lorsqu'une opération prédéfinie est détectée, l'affichage (203) de la première interface, où l'opération prédéfinie est utilisée pour ordonner à un terminal d'afficher l'interface principale,
**caractérisé en ce que**
l'affichage de la page de définition est déclenché en fonction d'un événement déclencheur, où l'événement déclencheur est qu'une durée pour actionner la première interface dépasse une durée prédéfinie.

2. Procédé selon la revendication 1, dans lequel la première interface est une interface Minus OneScreenView qui est affichée comme un bureau après qu'une opération de basculement, telle qu'un balayage vers la droite, soit effectuée sur un bureau par défaut.

3. Procédé selon la revendication 2, dans lequel l'affichage de la page de définition comprend:
la détection d'une seconde opération de basculement;
le basculement de l'interface principale vers la première interface sur la base de la seconde opération de basculement,
l'enregistrement d'informations de basculement relatives au basculement de l'interface principale vers la première interface; et
lorsque les informations de basculement satisfont à une condition prédéfinie, l'affichage de la page de définition.

4. Procédé selon la revendication 3, dans lequel l'affichage de la page de définition lorsque les informations de basculement satisfont à la condition prédéfinie comprend:
lorsqu'une fréquence d'utilisation, déterminée sur la base des informations de basculement, de la première interface satisfait à la condition prédéfinie, l'affichage de la page de définition.

5. Procédé selon la revendication 4, dans lequel l'enregistrement des informations de basculement relatives au basculement de l'interface principale vers la première interface comprend:
l'enregistrement d'informations relatives à l'heure d'entrée du basculement de l'interface principale vers la première interface; et
le procédé comprend en outre:
l'enregistrement d'informations relatives à l'heure de sortie de la sortie de la première interface,
où la fréquence d'utilisation de la première interface est déterminée en fonction des informations relatives à l'heure d'entrée et des informations relatives à l'heure de sortie.

6. Procédé selon la revendication 5, comprenant en outre:
la transmission des informations relatives à l'heure d'entrée et des informations relatives à l'heure de sortie à un serveur; et
la réception d'une instruction de changement d'interface qui est envoyée par le serveur lorsque la fréquence d'utilisation de la première interface est déterminée en fonction des informations relatives à l'heure d'entrée et des informations relatives à l'heure de sortie comme remplissant la condition prédéfinie,
où l'affichage de la page de définition lorsque la fréquence d'utilisation de la première interface, déterminée sur la base des informations de basculement, remplit la condition prédéfinie comprend: l'affichage de la page de définition sur la base de l'instruction de changement d'interface.

7. Procédé selon la revendication 5 ou 6, dans lequel la détermination de la fréquence d'utilisation de la première interface, en fonction des informations relatives à l'heure d'entrée et des informations relatives à l'heure de sortie, comprend:
lorsqu'une différence entre l'heure de sortie et l'heure d'entrée est supérieure à une durée prédéfinie, la détermination de ce que le basculement de l'interface principale à la première interface est l'utilisation de la première interface une fois; et
la détermination de la fréquence d'utilisation de la première interface en fonction du nombre d'utilisations de la première interface.

8. Procédé selon l'une quelconque des revendications 1 à 6, dans lequel
le passage de la première interface à l'interface principale comprend:
la modification d'un premier index de l'interface principale dans un champ de configuration de bureau dans une définition globale en un second index de la première interface; ou
la modification d'un premier index de l'interface principale dans un champ de configuration de bureau dans une définition d'utilisateur d'un compte utilisateur cible en un second index de la première interface;
l'affichage de la première interface lors de la détection de l'opération prédéfinie comprend:
l'affichage de la première interface lors de la détection de l'opération prédéfinie sous un compte utilisateur quelconque; ou
l'affichage de la première interface lors de la détection de l'opération prédéfinie sous le compte utilisateur cible.

9. Dispositif de traitement de page, comprenant un premier module de réception (110), un module de basculement (120), un premier module d'affichage (130) et un second module d'affichage (140), où
le premier module de réception (110) est configuré pour recevoir une première opération de basculement sur une page de définition d'un utilisateur;
le module de basculement (120) est configuré pour basculer une première interface vers une interface principale sur la base de la première opération de basculement, la première interface et l'interface principale étant différentes avant le basculement, où le basculement de la première interface vers l'interface principale est la définition de la première interface comme interface principale;
le premier module d'affichage (130) est configuré pour afficher la première interface lorsqu'une opération prédéfinie est détectée, l'opération prédéfinie étant utilisée pour ordonner à un terminal d'afficher l'interface principale; et
le second module d'affichage (140) est configuré pour afficher la page de définition avant que la première opération de basculement sur la page de définition soit reçue de l'utilisateur,
**caractérisé en ce que**
l'affichage de la page de définition est déclenché en fonction d'un événement de déclenchement, où l'événement de déclenchement est que la durée pour actionner la première interface dépasse une durée prédéfinie.

10. Dispositif selon la revendication 9, dans lequel, avant que la première interface ne bascule vers l'interface principale, la première interface est une interface MinusOneScreenView qui est affichée comme un bureau après qu'une opération de basculement, telle qu'un balayage vers la droite, soit réalisée sur un bureau par défaut.

11. Dispositif selon la revendication 10, dans lequel le second module d'affichage comprend en outre:
un sous-module de détection (141), configuré pour détecter une seconde opération de basculement, basculer l'interface principale vers la première interface sur la base de la seconde opération de basculement, et enregistrer des informations de basculement relatives au basculement de l'interface principale vers la première interface; et
un premier sous-module d'affichage (142), configuré pour afficher la page de définition lorsque les informations de basculement satisfont à une condition prédéfinie.

12. Dispositif selon la revendication 11, dans lequel le premier sous-module d'affichage (142) comprend:
une première unité d'affichage (1421), configurée pour afficher la page de définition lorsqu'une fréquence d'utilisation de la première interface, déterminée sur la base des informations de basculement, satisfait à la condition prédéfinie.

13. Dispositif selon la revendication 12, dans lequel le sous-module de détection (141) comprend:
une première unité d'enregistrement (1411), configurée pour enregistrer des informations relatives à l'heure d'entrée du basculement de l'interface principale vers la première interface;
une seconde unité d'enregistrement (1412), configurée pour enregistrer des informations relatives à l'heure de sortie de la sortie de la première interface; et
une unité de détermination (1413), configurée pour déterminer la fréquence d'utilisation de la première interface en fonction des informations relatives à l'heure d'entrée et des informations relatives à l'heure de sortie.

14. Dispositif selon la revendication 13, comprenant en outre:
un module d'émission (150), configuré pour transmettre à un serveur les informations relatives à l'heure d'entrée et les informations relatives à l'heure de sortie; et
un second module de réception (160), configuré pour recevoir une instruction de changement d'interface qui est envoyée par le serveur lorsque la fréquence d'utilisation de la première interface est déterminée en fonction des informations relatives à l'heure d'entrée et des informations relatives à l'heure de sortie comme satisfaisant à la condition prédéfinie, où
le second module d'affichage (140) comprend en outre:
un second sous-module d'affichage (143), configuré pour afficher la page de définition sur la base de l'instruction de changement d'interface;
l'unité de détermination (1413) est configurée pour:
lorsqu'une différence entre l'heure de sortie et l'heure d'entrée est supérieure à une durée prédéfinie, déterminer que le basculement de l'interface principale vers la première interface est l'utilisation de la première interface une fois; et
déterminer la fréquence d'utilisation de la première interface en fonction du nombre d'utilisations de la première interface.

15. Dispositif selon l'une quelconque des revendications 9 à 14, dans lequel
le module de basculement (120) comprend:
un premier sous-module de basculement (121), configuré pour modifier un premier index de l'interface principale dans un champ de configuration de bureau dans une définition globale en un second index de la première interface; ou
un second sous-module de basculement (122), configuré pour modifier un premier index de l'interface principale dans un champ de configuration de bureau dans une définition utilisateur d'un compte utilisateur cible en un second index de la première interface;
le premier module d'affichage (130) comprend:
un troisième sous-module d'affichage (131), configuré pour afficher la première interface lorsque l'opération prédéfinie est détectée sous un compte utilisateur quelconque; ou
un quatrième sous-module d'affichage (132), configuré pour afficher la première interface lorsque l'opération prédéfinie est détectée sous le compte utilisateur cible.
